(19) Europäisches Patentamt
European Patent Office
Office européen des brevets

(11) Veröffentlichungsnummer: **0 087 147**
**B1**

(12) # EUROPÄISCHE PATENTSCHRIFT

(45) Veröffentlichungstag der Patentschrift: **29.05.85**

(21) Anmeldenummer: **83101598.7**

(22) Anmeldetag: **19.02.83**

(51) Int. Cl.⁴: **C 07 C 93/04**, C 10 M 105/62, B 01 F 17/46, D 21 H 3/12, B 01 D 17/04

(54) **Quaternäre Vernetzungsprodukte von Xylylendichloriden mit Triäthanolaminkondensaten und deren Verwendung.**

(30) Priorität: **23.02.82 DE 3206459**

(43) Veröffentlichungstag der Anmeldung: **31.08.83 Patentblatt 83/35**

(45) Bekanntmachung des Hinweises auf die Patenterteilung: **29.05.85 Patentblatt 85/22**

(84) Benannte Vertragsstaaten: **BE DE FR GB IT NL**

(56) Entgegenhaltungen: **US - A - 3 558 314**

(73) Patentinhaber: **HOECHST AKTIENGESELLSCHAFT, Postfach 80 03 20, D-6230 Frankfurt am Main 80 (DE)**

(72) Erfinder: **Diery, Helmut, Dr., Theresenstrasse 45, D-6233 Kelkheim (Taunus) (DE)**
Erfinder: **Mees, Bernhard, Dr., Crooked Oak Lane 4700, Charlotte North Carolina 28211 (US)**

**EP 0 087 147 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Es ist bekannt, daß Triäthanolamin mit gutem Erfolg bei Formulierungen auf dem Reinigungssektor wie auch auf dem Korrosionsschutzgebiet eingesetzt wird. Ebenso ist bekannt, daß man Triäthanolamin in Gegenwart von katalytischen Mengen von Lewissäuren, wie z. B. $ZnCl_2$, unter Abspaltung von Wasser mit sich selbst kondensieren kann. Man erhält dabei bis zu einer Abspaltung von 1 Mol Wasser pro Mol Triäthanolamin eine hochviskose Paste, die noch in Wasser löslich ist und in Wasser ebenfalls hochviskose Lösungen bildet. Trotz dieser hohen Viskosität ist der Kondensationsgrad und das damit erreichte Molgewicht relativ niedrig. Das Molgewicht liegt nach diesem Verfahren bei ca. 650—750. Produkte dieser Art zeigen gewisse Wirkung auf den Gebieten der Papierveredlung, der Spaltung von Öl sowie der Schmiermittel. Nachteilig für die genannten Anwendungsgebiete ist jedoch das noch zu geringe Molgewicht der Triäthanolaminkondensate. Versucht man die Kondensation über das angegebene Maß von 1 Mol Wasser pro Mol Triäthanolamin hinaus durchzuführen, so durchläuft die Reaktion eine extrem zähe Gelphase, die technisch nicht mehr beherrschbar ist, und man erhält ein in Wasser völlig unlösliches Polykondensat.

Diese Befunde zeigen, daß es technisch nicht möglich ist, durch direkte Weiterkondensation zu Triäthanolaminkondensaten mit höherem Molekulargewicht und größeren anwendungstechnischen Möglichkeiten zu gelangen.

Es wurde nun gefunden, daß man zu technisch wertvollen Kondensaten mit höherem Molekulargewicht kommt, wenn man die Triäthanolaminkondensate mit Xylylendichloriden umsetzt.

Gegenstand der Erfindung sind somit quartäre Vernetzungsprodukte, die erhalten werden durch Umsetzung von 1 Mol eines Triäthanolaminkondensats der Formel

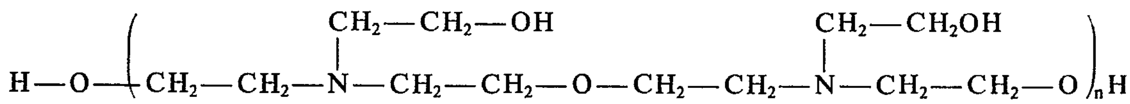

wobei n eine Zahl von 1 bis 3 bedeutet, das in 40%iger wäßriger Lösung eine Viskosität von 30 bis 1500 mPa s aufweist, mit 0,5 bis 0,05 Mol Xylylendichlorid bei einer Temperatur von 70 bis 160° C.

Als Triäthanolaminkondensate werden solche Produkte eingesetzt, die in Wasser noch völlig klar löslich sind. Die Viskosität einer 40%igen, wäßrigen Lösung sollte zwischen 30—1500 mPa s liegen, vorzugsweise zwischen 100—1000 mPa s (gemessen in einem Kugelfallviskosimeter). Die Kondensation selbst wird in an sich bekannter Weise durch saure Katalyse bei Temperaturen zwischen 180° C bis 230° C durchgeführt, wobei es sich empfiehlt, das Reaktionswasser mittels eines Stickstoffstromes abzudestillieren.

Als Xylylendichloride kommen in Frage o-Xylylen-dichlorid, p-Xylylen-dichlorid und 2,3,5,6-Tetrachlor-p-Xylylendichlorid. Man erhält diese Xylylendichloride in bekannter Weise durch partielle Seitenkettenchlorierung der entsprechenden Xylole. Im Gegensatz zu den Vernetzungen mit Epoxyden und Isocyanaten, welche an der OH-Gruppe des Triäthanolaminkondensats reagieren, erfolgt die Vernetzung mit den Xylylendichloriden am Stickstoffatom. Dadurch erhält man quarternierte Produkte, die ganz andere Wirkungsprofile zeigen.

Die Umsetzung der Triäthanolaminkondensate mit den Xylylendichloriden erfolgt bei Temperaturen zwischen 70—160° C, vorzugsweise zwischen 80—120° C. Die Reaktion erfolgt im allgemeinen ohne Lösungsmittel, doch ist es auch möglich, die Reaktion in einem geeigneten Lösungsmittel durchzuführen. Das ist vor allem dann angebracht, wenn die Viskosität der Reaktanten und des Endproduktes in unverdünntem Zustand zu hoch ist.

Das Molverhältnis des Triäthanolaminkondensates zum Xylylendichlorid liegt bei 1 : 0,5 bis 1 : 0,05, wobei die Obergrenze des Xylylendichlorideinsatzes abhängig ist von der Viskosität und damit dem Molgewicht des eingesetzten Kondensates. Je höher das Molgewicht des Kondensates ist, desto niedriger sollte die zugesetzte Menge an Dichlorid sein, da man sonst durch Vernetzungsreaktionen gelartige, nicht mehr wasserlösliche Endprodukte erhält.

Das eingesetzte Xylylendichlorid kann entweder direkt oder in mehreren Portionen zugesetzt, oder, wenn es flüssig ist, kontinuierlich während der Reaktionszeit zugetropft werden. Ein zusätzlicher Katalysator ist für die Umsetzung nicht erforderlich, und die Reaktionszeit hängt ab von der Reaktionstemperatur. Die Umsetzung wird so lange durchgeführt, bis eine Titration auf ionisches Chlorid der Theorie entspricht.

Die so erhaltenen Produkte eignen sich sehr gut als Spalter von natürlichen und künstlichen Emulsionen aus Wasser und Mineralöl, als Schmierstoffe von Maschinenteilen sowie als Papierhilfsmittel.

Die folgenden Beispiele sollen die Erfindung erläutern, ohne sie jedoch einzuschränken.

## Beispiel 1

298 Gewichtsteile Triäthanolamin werden zusammen mit 3 Gewichtsteilen gepulvertem Zinkchlorid in einen Liter Vierhalskolben mit Rührer, Thermometer und Kurzwegdestillationsaufsatz gegeben und

anschließend unter Rühren bis auf 230°C geheizt. Durch Überleiten eines leichten Stickstoffstroms wird das entstehende Reaktionswasser über den Kurzwegdestillationsaufsatz abgetrennt. Man läßt so lange reagieren, bis etwa 35,5 g Destillat abgeschieden ist (ca. 5 Stunden). Das Produkt ist noch wasserlöslich und hat direkt gemessen (d. h. ohne Verdünnung in Wasser) eine Viskosität von 32 Pa s bei Raumtemperatur. Zu diesem Kondensat gibt man über einen Pulvertrichter im Verlauf von 1 Stunde bei 100°C Innentemperatur unter Rühren portionsweise 6 Gewichtsteile p-Xylylendichlorid, und man läßt noch 1 Stunde nachrühren. Wenn die potentiometrische Titration auf ionisches Chlorid zeigt, daß die Quarternierung vollständig ist, wird in den Ansatz so viel Wasser gegeben, daß eine 40%ige wäßrige Lösung resultiert. Die Viskosität dieser Lösung beträgt 5—6 Pa s.

## Beispiel 2

298 Gewichtsteile Triäthanolamin werden wie in Beispiel 1 beschrieben so lange kondensiert, bis eine Probe in unverdünntem Zustand eine Viskosität von 66 Pa s zeigt (bei Raumtemperatur).

Anschließend gibt man gemäß Beispiel 1 bei 100°C 12 g o-Xylylendichlorid im Verlauf von 1 Stunde zu und läßt noch 1 Stunde nachrühren. Nach Überprüfung des Chloridwertes wird die hochviskose, braune Flüssigkeit mit Wasser auf 40 Gew.-% verdünnt. Man erhält das Endprodukt mit einer Viskosität von 8—9 Pa s.

## Beispiel 3

Man stellt gemäß Beispiel 2 ein Triäthanolaminkondensat mit einer Viskosität von 66 Pa s her. Das sehr viskose Produkt wird mit 60 Gewichtsteilen Methoxybutanol verdünnt, und man gibt bei 120°C 6 Gewichtsteile Tetrachlor-p-Xylylendichlorid portionsweise zu und erhöht dann die Temperatur während 2 weiteren Stunden auf 150°C. Nach beendeter Umsetzung kühlt man auf 90°C ab, versetzt mit 100 Gewichtsteilen Wasser und destilliert das Methoxybutanol ab. Nach Einstellen des Produktes mit Wasser auf 40 Gewichtsprozent erhält man eine braune Flüssigkeit mit einer Viskosität von 8—9 Pa s.

## Beispiel 4

298 Gewichtsteile eines Triäthanolaminkondensates gemäß Beispiel 1 mit einer Viskosität von 32 Pa s werden bei 100°C innerhalb 1 Stunde mit einer Mischung aus 4 Teilen p-Xylylendichlorid und 4 Teilen o-Xylylenchlorid versetzt. Man läßt 2—3 Stunden bei 100°C nachreagieren und stellt dann mit Wasser auf 40 Gew.-%. Die resultierende Flüssigkeit hat eine Viskosität von 4 Pa s.

**Patentansprüche**

1. Quartäre Vernetzungsprodukte erhalten durch Umsetzung von 1 Mol eines Triäthanolaminkondensats der Formel

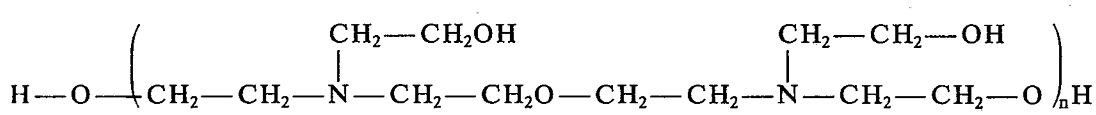

wobei n eine Zahl von 1 bis 3 bedeutet, das in 40%iger wäßriger Lösung eine Viskosität von 30 bis 1500 mPa s aufweist, mit 0,5 bis 0,05 Mol Xylylendichlorid bei einer Temperatur von 70 bis 160°C.

2. Quartäre Vernetzungsprodukte nach Anspruch 1 erhalten durch Umsetzung mit o-Xylylendichlorid, p-Xylylendichlorid oder Tetrachlor-p-Xylylendichlorid.

3. Verwendung der quartären Vernetzungsprodukte nach Anspruch 1 als Demulgatoren von Öl-Wasser-Emulsionen, als Schmierstoffe und als Papierhilfsmittel.

**Claims**

1. Quaternary crosslinked products obtained by reacting 1 mole of a triethanolamine condensate of the formula

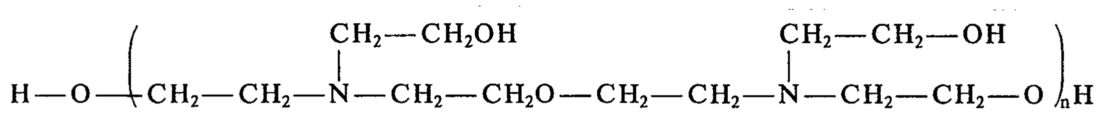

wherein n is an integer of from 1 to 3, which has a viscosity of 30 to 1500 mPa s in 40% aqueous solution with 0,5 to 0,05 mole of xylylene dichloride at a temperature from 70 to 160° C.

2. The quaternary crosslinked product of claim 1 obtained by reaction with o-xylylene dichloride, p-xylylene dichloride or tetrachloro-p-xylylene dichloride.

3. Method of use of the quaternary crosslinked products of claim 1 as demulsifiers of oil-water-emulsions, as lubricants and as auxiliaries in the paper industry.

**Revendications**

1. Produits de réticulation quaternaires obtenus par réaction de 1 mol d'un produit de condensatiion de la triéthanolamine répondant à la formule:

$$H—O—\left( CH_2—CH_2—\underset{}{N}(CH_2—CH_2OH)—CH_2—CH_2O—CH_2—CH_2—N(CH_2—CH_2—OH)—CH_2—CH_2—O \right)_n H$$

dans laquelle n désigne un nombre de 1 à 3, ce produit de condensation ayant, en solution aqueuse à 40%, une viscosité de 30 à 1500 mPa·s, avec de 0,5 à 0,05 mol de dichlorure de xylylène, à une température de 70 à 160° C.

2. Produits de réticulation quaternaires selon la revendication 1, qui ont été obtenus par réaction du dichlorure d'o-xylylène, du dichlorure de p-xylylène ou du dichlorure de tétrachloro-p-xylylène.

3. Application des produits de réticulation quaternaires selon la revendication 1 comme désémulsionnants d'émulsions LH (huile dans l'eau), comme lubrifiants et comme adjuvants pour papier.